# DEMANDE DE BREVET EUROPEEN

(11) **EP 4 685 900 A1**
(43) Date de publication de la demande: **28.01.2026**
(21) Numéro de dépôt: 24190134.7
(22) Date de dépôt: 22.07.2024
(51) Int. Cl.: H01M 10/052, H01M 10/054, H01M 10/056, H01M 10/0565, C03C 17/42, C23C 14/00

(54) **ÉLECTROLYTE SOLIDE COMPRENANT UN REVÊTEMENT MÉTALLIQUE ET PROCÉDÉS DE FABRICATION D'UN TEL ÉLECTROLYTE SOLIDE**

(71) Demandeur: The Swatch Group Research and Development Ltd, 2074 Marin (CH); LEPMI - Laboratoire d'électrochimie et de physiochimie des matériaux et des interfaces, 38402 Saint Martin d'Hères (FR)
(72) Inventeur: MONGELLUZZO, Joanna, 4566 Halten (CH); VILLEVIEILLE, Claire, 38190 Le Champ-près-Froges (FR); MERCIER-GUYON, Benjamin, 74540 Chapeiry (FR)
(74) Mandataire: ICB SA

(57) **Abrégé**

L'invention se rapporte à un électrolyte solide comprenant un substrat réalisé dans un matériau d'électrolyte solide, ledit substrat présentant une première face et une deuxième face, caractérisé en ce que l'électrolyte solide comprend en outre un revêtement métallique disposé sur au moins une partie de la première face et/ou sur au moins une partie de la deuxième face du substrat. L'invention se rapporte également à une batterie tout-solide comprenant ledit électrolyte solide, et à un procédé de fabrication dudit électrolyte solide.

## Description

### Domaine technique de l'invention

La présente invention se rapporte à un électrolyte solide, notamment un électrolyte polymère solide, comprenant un revêtement métallique sur au moins une de ses faces. L'invention se rapporte également aux procédés de fabrication d'un tel électrolyte solide et aux batteries comprenant un tel électrolyte solide, notamment des batteries tout-solides.

### Arrière-plan technologique

Les batteries tout-solides (ASSB), comme les batteries Li-ion, Na-ion, etc., utilisant des électrolytes solides inorganiques ou des électrolytes polymères solides, suscitent un intérêt croissant pour les dispositifs de stockage d'énergie électrochimique en raison de leurs nombreux avantages par rapport aux batteries comprenant un électrolyte liquide. Proposant des densités d'énergies accrues via l'utilisation d'une électrode négative en métal, p.ex. en lithium métallique ou comprenant du silicium ou tout autre matériau faisant un alliage avec le Li ou Na, etc., des températures de fonctionnement et durée de vie étendues tout en augmentant la sécurité des utilisateurs par leur caractère non inflammable et non volatile. Le remplacement des électrolytes liquides actuellement utilisés par leurs homologues solides est ainsi considéré comme la prochaine étape technologique majeure dans le développement des batteries de demain.

Bien qu'atteignant des conductivités ioniques de plus en plus élevées, l'utilisation à plus large échelle d'électrolyte solide se heurte encore à de nombreux verrous technologiques pour que les batteries tout-solides passent de la fabrication en laboratoire à très large échelle. Parmi les défis, il y a par exemple le contrôle de la qualité des interfaces entre l'électrode (y inclus les électrodes positives et les électrodes négatives) et l'électrolyte qui est cruciale pour assurer les transports de type ionique et/ou du type électronique au sein de la batterie. En effet, différents facteurs tels que la qualité initiale du montage, les changements volumiques des matériaux actifs pendant le cyclage ou la formation d'espèces chimiques issues de la dégradation des électrodes et des électrolytes pendant le cyclage formant alors une couche de passivation au niveau des interfaces électrode/électrolyte (donc à la surface de l'électrolyte) peuvent mener à une augmentation de la résistance interfaciale et ainsi à une dégradation des performances électrochimiques de la batterie et à la durée de vie d'une telle batterie.

Afin d'optimiser la qualité de l'interface, plusieurs stratégies ont été proposées, parmi elles le dépôt d'une couche fine d'aluminium, de magnésium, de silicium, de germanium et d'or à la surface des électrolytes céramiques à structure grenat, qui forment des alliages avec le lithium.

*Li₇La₃Zr₂O₁₂* Interface Modification for Li Dendrite Prevention, C.-L. Tsai, et al., ACS Appl. Mater. Interfaces, 8, 16, 2016, décrit un dépôt d'une couche mince d'or à la surface d'un électrolyte céramique de type LLZ par pulvérisation cathodique, améliorant ainsi le contact interfacial entre l'électrode négative en lithium métallique et l'électrolyte céramique de type LLZ par la formation d'alliages Li-Au tels que Au₅Li₄ ou AuLi₃ qui stabilisent l'interface, supprimant ainsi la formation de dendrites de lithium.

Quant aux électrolytes polymères, parmi les stratégies d'amélioration proposées se trouvent l'optimisation de la composition de l'électrolyte polymère solide, la modification de la surface des électrodes, et l'introduction d'une couche intermédiaire artificielle stable pour obtenir un bon contact interfacial et garantir un transport ionique continu entre l'électrolyte polymère et les électrodes.

Malheureusement, la plupart des solutions nécessitent l'utilisation d'additifs organiques, principalement des solvants et/ou des réactifs difficiles à trouver sur le marché. De plus, ces solutions doivent être repensées/mises au point en fonction du système de stockage d'énergie ciblé.

### Résumé de l'invention

L'invention a notamment pour objectif de pallier les différents inconvénients des électrolytes solides, et plus précisément de leur interface avec des électrodes.

Plus précisément, un objectif de l'invention est de fournir un électrolyte solide permettant d'obtenir un contact interfacial stable et amélioré par rapport aux électrolytes solides connus. Un autre objectif de l'invention est de fournir un électrolyte solide ayant une résistance interfaciale à la surface de l'électrolyte, réduite, permettant ainsi de fournir des batteries tout-solides ayant une interface améliorée entre les électrodes et l'électrolyte. Un autre objectif est également un électrolyte solide apte à être utilisé en combinaison avec n'importe quel type d'électrodes (négatives et positives) d'une batterie tout-solide.

Un autre objectif est de fournir une batterie tout-solide présentant une résistance interfaciale entre ses électrodes et son électrolyte réduite, et présentant un contact interfacial plus homogène, plus uniforme, réduisant ou même supprimant la formation de dendrites - p.ex. de dendrites de lithium ou de sodium si l'électrode négative est du lithium métallique ou du sodium métallique, respectivement, ou des dépôts de lithium de type plating sur du graphite si l'électrode négative contient du graphite - et augmentant ainsi la durée de vie d'une telle batterie.

Un autre objectif de la présente invention est de fournir un procédé de fabrication d'un tel électrolyte solide, le procédé étant simple, ne pas nécessitant l'utilisation des additives et/ou de solvants, et ayant un impact environnemental faible.

A cet effet, un premier aspect de la présente invention concerne un électrolyte solide selon les revendications annexées.

L'électrolyte solide comprend un substrat réalisé dans un matériau d'électrolyte solide, ledit substrat présentant une première face et une deuxième face.

Des exemples non-limitatifs de substrats dans la présente invention incluent des films, qui peuvent être flexibles ou rigides, et par exemple transparent, des plaques, des feuilles, des couches multicouches, et des panneaux.

L'électrolyte solide comprend en outre un revêtement métallique disposé sur au moins une partie de la première face et/ou sur au moins une partie de la deuxième face du substrat.

Le terme « une partie d'une face » est utilisé pour indiquer au moins 20 % de la surface, de préférence au moins 50 %, p. ex. 75 %, 80 %, 85 %, 90 %, 95 %, ou substantiellement la surface entière.

Le revêtement métallique peut comprendre ou consister de tout élément susceptible de réagir avec les métaux dans les électrodes de la batterie tout-solide envisagée, pour former un alliage. Par exemple, si la batterie envisagée est du type Li-ion ou du type Na-ion, le revêtement métallique peut comprendre ou consister de tout élément susceptible de réagir avec le lithium ou le sodium, respectivement, pour former un alliage.

Avantageusement, le revêtement métallique comprend ou consiste substantiellement de l'or, de l'argent, de l'étain, ainsi que des combinaisons, et de préférence de l'or.

Avantageusement, le revêtement métallique a une épaisseur comprise entre 0,5 nm et 500 nm, de préférence comprise entre 1 nm et 100 nm, plus préférentiellement comprise entre 2 nm et 75 nm, p. ex. comprise entre 3 nm et 50 nm, ou entre 4 nm et 40 nm, ou bien entre 5 nm et 30 nm.

Le revêtement métallique peut comprendre deux ou plusieurs couches métalliques, c'est-à-dire le revêtement métallique peut être un revêtement multi-couches.

Avantageusement, le matériau d'électrolyte solide peut être un matériau connu dans le domaine technique. Avantageusement, le matériau de l'électrolyte est un matériau d'électrolyte polymère solide comprenant une matrice polymère, p. ex. une matrice comprenant ou substantiellement consistant d'un polymère ou d'un copolymère sur base d'oxyde de polyéthylène (PEO) ou son alliage avec par exemple du fluorure de polyvinylidène (PVDF). Alternativement, et avantageusement, le matériau d'électrolyte solide est un matériau hybride du type polymère-inorganique.

Un deuxième aspect de la présente invention concerne une batterie tout-solide selon les revendications annexées.

La batterie tout-solide (ASSB) comprend l'électrolyte solide selon le premier aspect de la présente invention. Avantageusement, la batterie comprend en outre une électrode négative et une électrode positive. Avantageusement, l'électrode négative forme une interface avec le revêtement métallique de l'électrolyte solide. Optionnellement, quand l'électrolyte solide comprend un revêtement métallique sur la première et la deuxième face du substrat, l'électrolyte positive forme également une interface avec le revêtement métallique de l'électrolyte solide.

Avantageusement, la batterie tout-solide est une batterie du type Li-ion ou du type Na-ion. Dans ce cas, le revêtement métallique de l'électrolyte solide peut comprendre ou consister de tout élément susceptible de réagir avec le lithium ou le sodium, respectivement, pour former un alliage.

Avantageusement, la batterie tout-solide comprend une électrode négative comportant ou consistant substantiellement du lithium métallique, du sodium métallique ou un alliage du type Li-In, formant une interface avec le revêtement métallique de l'électrolyte polymère solide.

Un troisième aspect de la présente invention concerne un procédé de fabrication d'un électrolyte solide comprenant un revêtement métallique selon les revendications annexées.

Avantageusement, l'électrolyte solide selon le premier aspect de l'invention est fabriqué par le procédé selon le troisième aspect de l'invention.

Le procédé comprend une étape de mise à disposition dans une chambre de réaction d'un substrat réalisé dans un matériau d'électrolyte solide, ledit substrat présentant une première face et une deuxième face.

Avantageusement, le procédé comprend en outre une étape d'application d'un masque à une portion du substrat. L'application d'un masque réduit ainsi la surface du substrat exposée dans la chambre de réaction, et donc à l'application d'un revêtement. Un masque est avantageusement appliqué afin d'éviter tout dépôt à une portion du substrat.

Le masque peut être tout masque capable de résister à une pression réduite et permettant d'éviter le dépôt à la surface couverte par le masque. Le masque est avantageusement fait sur mesure. Le masque peut être intégré dans un porte échantillon apte à contenir le substrat. Il va de soi que la géométrie, l'épaisseur, le matériau et la taille du masque sont sélectionnés en fonction de la surface à masquer, de la composition de la cible et des conditions du procédé de dépôt. Avantageusement, le masque est réalisé en acier inoxydable.

Avantageusement, quand un masque est appliqué, au moins une tranche du substrat est couverte par le masque. Les inventeurs ont découvert que le dépôt d'un revêtement selon la présente invention à la tranche du substrat pourrait résulter en un court-circuit lors de l'assemblage d'une batterie.

Une cible métallique est également mise à disposition dans la chambre de réaction. Alternativement, un fil comprenant un métal est mis à disposition dans la chambre de réaction. La cible métallique ou le fil comprenant un métal peut comprendre ou consister de tout élément susceptible de réagir avec les métaux dans les électrodes de la batterie tout-solide envisagée, pour former un alliage. Par exemple, si la batterie envisagée est du type Li-ion ou du type Na-ion, la cible métallique ou le fil comprenant un métal peut comprendre ou consister de tout élément susceptible de réagir avec le lithium ou le sodium, respectivement, pour former un alliage. Avantageusement, la cible métallique ou le fil comprenant un métal comprend ou consiste substantiellement de l'or, de l'argent, de l'étain, ou des combinaisons de ceux-ci, de préférence de l'or.

Ensuite, la pression dans la chambre de réaction est réduite jusqu'à une pression prédéterminée. Avantageusement, la pression prédéterminée est comprise entre 0,01 mbar et 0,5 mbar, de préférence entre 0,02 mbar et 0,2 mbar, plus préférentiellement comprise entre 0,05 mbar et 0,1 mbar.

Une fois la pression prédéterminée obtenue, un gaz est introduit dans la chambre de réaction. Avantageusement, le gaz est un gaz inerte. Avantageusement, le gaz inerte comprend ou consiste substantiellement de l'argon.

Un champ électrique est appliqué pour ioniser le gaz. Cette ionisation crée un plasma du gaz, ledit plasma contenant des ions du gaz.

Avec l'aide dudit plasma, des atomes de la cible métallique ou du fil comprenant un métal sont enlevés. Ces atomes condensent ensuite sur la première et/ou la deuxième face du substrat, formant ainsi un revêtement sur ladite face ou lesdites faces, et obtenant ainsi l'électrolyte solide comprenant un revêtement métallique. Si le procédé comprend l'application d'un masque comme mentionné ci-dessus, il va de soi que le revêtement est formé sur la surface du substrat non-couverte par le masque.

Un des avantages de l'électrolyte solide selon la présente invention est que le revêtement métallique permet d'améliorer le contact du matériau d'électrolyte solide avec la ou les électrodes de la batterie, et notamment avec l'électrode négative, ainsi réduisant la résistance interfaciale, permettant un flux d'ions, p. ex. des ions de lithium ou des ions de sodium, plus stable et plus homogène. Cela permet de réduire le risque de court-circuit et d'améliorer la durée de vie de la batterie secondaire.

Plus particulièrement, le revêtement métallique assure une bonne qualité d'interface ayant une résistance interfaciale minimale et en même temps n'affecte pas le passage des ions, p. ex. des ions de lithium ou des ions de sodium.

Un des avantages du procédé de fabrication est sa simplicité. De plus, le procédé permet de contrôler l'épaisseur du revêtement et permet de déposer des revêtements ayant une épaisseur en dessous d'un micromètre, ce qui nécessite une quantité plus basse des métaux utilisés.

En outre, l'utilisation d'un masque permet d'éviter le dépôt d'un revêtement à certains endroits du substrat où la présence du revêtement est de préférence évitée.

### Brève description des figures

Les buts, avantages et caractéristiques sont démontrés dans les figures suivantes, qui ne sont pas limitatives, et dans lesquelles :
- Les figures 1A et 1B montrent le verso et le recto d'un masque ;
- La figure 2 montre un disque d'électrolyte polymère solide avant le dépôt d'un revêtement ;
- La figure 3 montre un disque d'électrolyte polymère solide selon l'invention, comprenant le disque d'électrolyte polymère solide de la figure 1 et un revêtement en or ;
- La figure 4 montre la tension et le courant en fonction de la capacité lors du cyclage galvanostatique d'une demi-cellule comprenant un première électrolyte polymère solide recouvert d'or selon l'invention ;
- La figure 5 montre la tension et le courant en fonction de la capacité lors du cyclage galvanostatique d'une demi-cellule comprenant un deuxième électrolyte polymère solide recouvert d'or selon l'invention ;
- La figure 6 montre la tension et le courant en fonction de la durée de cyclage d'une cellule symétrique comprenant un troisième électrolyte polymère solide recouvert d'or selon l'invention ;
- La figure 7 montre la tension et le courant en fonction de la durée de cyclage d'une cellule symétrique comprenant un quatrième électrolyte polymère solide recouvert d'or selon l'invention ;

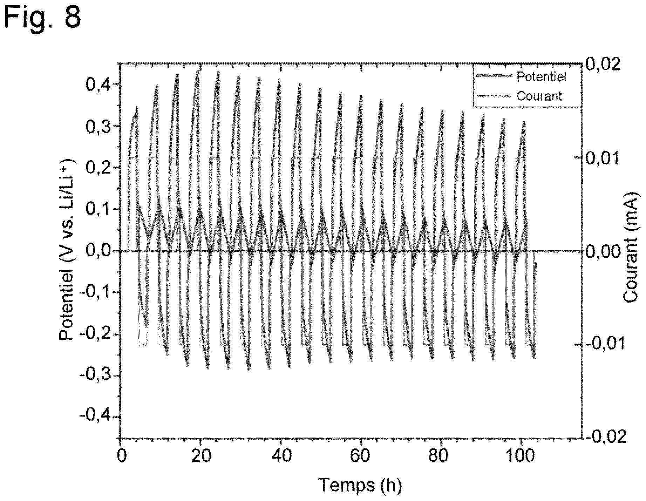

- La figure 8 montre la tension et le courant en fonction de la durée de cyclage d'une cellule symétrique comprenant un cinquième électrolyte polymère solide recouvert d'or selon l'invention.

### Description détaillée de l'invention

L'électrolyte solide selon la présente invention comprend un substrat réalisé dans un matériau d'électrolyte solide. Le substrat présente une première face et une deuxième face.

Un premier revêtement métallique est disposé sur au moins une partie de la première face du substrat. Optionnellement, un deuxième revêtement métallique est déposé sur au moins une partie de la deuxième face du substrat. Quand l'électrolyte solide comprend deux revêtements, les revêtements peuvent avoir une composition substantiellement identique ou une composition différente, et/ou une épaisseur substantiellement identique ou une épaisseur différente.

Avantageusement, le (chaque) revêtement métallique comprend ou consiste substantiellement d'un métal ou de plusieurs métaux capables de former un alliage avec du lithium et/ou du sodium, tel que l'or, l'argent, l'étain, l'aluminium, le phosphore, le plomb, le silicium, des alliages de ceux-ci, ainsi que des combinaisons deux ou plusieurs de ceux-ci. De préférence, le revêtement métallique comprend ou consiste substantiellement de l'or métallique ou des alliages d'or, de l'argent métallique ou des alliages de l'argent, ou de l'étain ou des alliages de l'étain.

Le (chaque) revêtement métallique peut comprendre une ou plusieurs couches, c'est-à-dire le revêtement métallique peut être un revêtement multi-couches ayant un nombre de couches d'au moins deux. Dans le cas où le revêtement comprend plusieurs couches, chacune des couches peut avoir sa propre épaisseur, surface, taille, et/ou sa propre composition.

Avantageusement, la composition de chaque couche est comme décrite ci-dessus. Par exemple, quand le revêtement comprend deux couches, une couche peut consister substantiellement de l'or et l'autre couche peut comprendre un alliage d'or.

Avantageusement, l'épaisseur de chaque couche est comprise entre 0,5 nm et 500 nm, de préférence comprise entre 1 nm et 100 nm, plus préférentiellement comprise entre 2 nm et 75 nm, p. ex. comprise entre 3 nm et 50 nm, ou entre 4 nm et 40 nm, ou bien entre 5 nm et 30 nm.

Avantageusement, l'épaisseur de chaque couche est telle que l'épaisseur totale du revêtement est comprise entre comprise entre 0,5 nm et 500 nm, de préférence comprise entre 1 nm et 100 nm, plus préférentiellement comprise entre 2 nm et 75 nm, p. ex. comprise entre 3 nm et 50 nm, ou entre 4 nm et 40 nm, ou bien entre 5 nm et 30 nm.

Par exemple, un revêtement ayant deux couches peut avoir une couche d'une épaisseur de 2 nm et une couche d'une épaisseur de 3 nm, donnant une épaisseur totale du revêtement de 5 nm.

Un revêtement multi-couches permet de varier l'épaisseur, la surface, la taille, et la composition afin d'obtenir une performance électrochimique spécifique de la demi-cellule et de la batterie complète avec l'électrolyte solide comparé à celle avec un électrolyte solide ayant un revêtement consistant d'une seule couche.

Il va de soi que le nombre de couches, leur composition, leur épaisseur, leur surface et leur taille sont choisis en fonction de la performance voulue, ainsi que la composition des électrodes de la batterie.

Il va de soi que le revêtement est perméable pour des ions alcalins, autrement dit, des ions métalliques peuvent passer le revêtement. Quand l'électrolyte est utilisé dans une batterie du type Li-ion ou du type Na-ion, le revêtement permet le passage des ions de lithium ou des ions de sodium, respectivement, afin d'avoir une batterie qui fonctionne.

Une batterie tout-solide (ASSB) selon l'invention comprend un électrolyte solide selon la présente invention. La batterie tout-solide comprend également une électrode négative et une électrode positive.

L'électrode positive peut être une électrode positive apte à être utilisée dans une batterie tout-solide, telles que des électrodes positives comprenant du NMC, du LFP, du LNMO, ou des combinaisons de ces matériaux, dans lequel ces matériaux peuvent être dopés comme connu dans l'état de l'art. L'électrode négative peut être une électrode négative apte à être utilisée dans une batterie tout-solide, par exemple une électrode comprenant ou substantiellement consistant en de lithium métal (p.ex. pour une batterie du type Li-ion) ou de sodium métal (p. ex pour une batterie du type Na-ion).

Avantageusement, afin d'obtenir la meilleure performance électrochimique, au moins l'électrode négative forme une interface avec le revêtement métallique de l'électrolyte solide.

Optionnellement, quand l'électrolyte solide comprend un premier revêtement métallique disposé sur la première face du substrat et un deuxième revêtement disposé sur la deuxième face du substrat, l'électrolyte positive et l'électrode négative forment toutes les deux une interface avec un des deux revêtements métalliques de l'électrolyte solide.

La présente invention concerne également un procédé de fabrication d'un électrolyte solide tel que décrit ci-dessus.

Avantageusement, le procédé est un procédé de dépôt physique par phase vapeur (anglais : physical vapour déposition, PVD), un procédé de dépôt chimique en phase vapeur (anglais : chemical vapour déposition, CVD), ou un procédé de dépôt de couches atomiques (anglais : atomic layer déposition, ALD). Plus particulièrement, le procédé est un dépôt par pulvérisation cathodique.

Le procédé comprend une étape de mise à disposition dans une chambre de réaction d'un substrat réalisé dans un matériau d'électrolyte polymère solide. Le substrat est avantageusement comme décrit ci-dessus. Avantageusement, le substrat est placé dans la chambre de réaction en le plaçant sur un porte échantillon. Cela permet sa position optimale dans la chambre de réaction, afin de réaliser un revêtement homogène et d'une excellente qualité.

Une cible métallique est également mise à disposition dans la chambre de réaction. Alternativement, un fil comprenant un métal est utilisé au lieu d'une cible métallique Avantageusement, la cible métallique, pour le fil comprenant un métal, comprend ou consiste substantiellement de l'or, de l'argent, de l'étain ou des combinaisons de ceux-ci, de préférence de l'or.

Ensuite, la pression dans la chambre de réaction est réduite afin d'éliminer toute contamination de la chambre de réaction. Puis, un gaz est introduit. Avantageusement, le gaz est un gaz inerte. Avantageusement, le gaz inerte comprend ou consiste substantiellement de l'argon, de l'azote et/ou de l'hélium, de préférence le gaz inerte est de l'argon.

Un champ électrique est appliqué pour ioniser le gaz. L'application du champ électrique peut être démarrée avant, en même temps ou après le début de l'introduction du gaz.

Cette ionisation crée un plasma du gaz, ledit plasma contenant des ions du gaz. Avantageusement, un flux de gaz est introduit dans la chambre de réaction en continu. Cela garantit la présence d'une quantité d'atomes de gaz suffisante dans la chambre de réaction pour maintenir la présence du plasma.

Avec l'aide dudit plasma, des atomes de la cible métallique ou du fil comprenant un métal sont enlevés. Ces atomes condensent ensuite sur la première et/ou la deuxième face du substrat, formant ainsi un revêtement sur ladite face ou lesdites faces, et obtenant ainsi l'électrolyte solide comprenant un revêtement métallique.

Avantageusement, s'il est souhaité que le dépôt n'ait pas lieu sur une portion du substrat, par exemple sa tranche et/ou une des deux faces du substrat, un masque est appliqué afin de limiter, de préférence éviter, l'exposition de cette portion du substrat aux atomes enlevés et évitant ainsi leur condensation à cette portion du substrat. Le masque peut être un dispositif qui couvre une portion prédéfinie du substrat de façon à ne pas exposer cette portion au plasma.

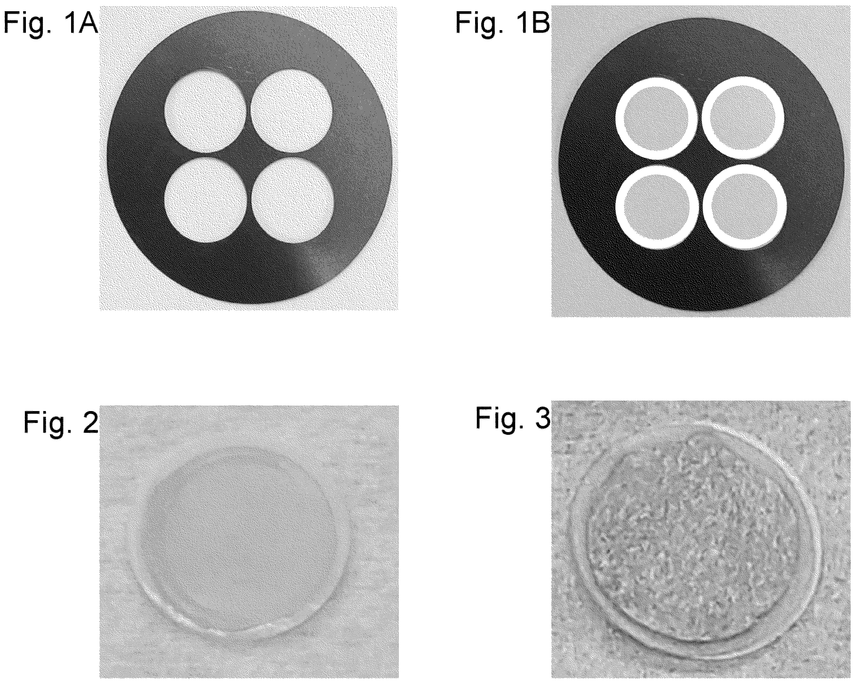

Les figures 1A et 1B montrent les deux faces d'un masque selon la présente invention. Le masque est un dispositif dans lequel le substrat est placé de façon à masquer (couvrir) une des deux faces (Fig. 1A) et la tranche de l'autre face (Fig. 1B). Le masque, et plus particulièrement la partie masquant la trance, est réalisé en acier inoxydable.

Avantageusement, si le dépôt d'un revêtement à la première et à la deuxième face du substrat est voulu, cela peut être réalisé en une étape de pulvérisation cathodique, ou, en utilisant le masque mentionné ci-dessus, en deux étapes en couvrant d'abord une face pendant la première étape de dépôt, et après l'autre face pendant la deuxième étape de dépôt.

Le procédé peut également être répété avec une deuxième cible ayant une composition différente que la composition de la première cible, afin de déposer un revêtement et/ou une couche ayant une autre composition, obtenant ainsi un revêtement différent à chaque face et/ou un revêtement multi-couches, respectivement.

Avantageusement, le substrat, p. ex. par son porte échantillon si ceci est utilisé, est incliné et/ou tourné lors du procédé. Cela permet d'obtenir un revêtement très homogène sur toute la surface exposée du substrat (i.e. la surface non-masquée, si un masque est appliqué). Il va de soi que cela, entre autres, dépend de l'appareil utilisé.

### Exemples

### Exemple 1

Trois électrolytes selon la présente invention ont été préparés, ayant un revêtement en or à une face, et dans lequel l'épaisseur de ce revêtement a été variée.

Un disque d'électrolyte polymère solide est utilisé comme le substrat réalisé dans un matériau d'électrolyte polymère solide. La cible était une cible en or ayant une pureté de 99,999 %. Le disque d'électrolyte polymère solide a été placé dans un masque en acier inoxydable selon les figures 1A et 1B afin d'éviter le dépôt sur la tranche de l'électrolyte, car ceci pourrait conduire à un court-circuit lors de l'assemblage d'une batterie avec l'électrolyte polymère solide obtenu. De plus, seulement une des faces du substrat était exposée, l'autre étant masquée, afin de déposer un revêtement à une face de l'électrolyte polymère solide uniquement.

Le disque d'électrolyte polymère solide et la cible ont été placés dans la chambre de réaction d'un appareil de dépôt physique par phase vapeur (PVD) (type SC7620 de EMITECH). Une fois la chambre de réaction fermée, la pression dans ladite chambre a été réduite jusqu'à une pression de 0,06 mbar et cette pression a été maintenue pendant 30 minutes afin d'évacuer toute contamination possible - c'est-à-dire y inclut l'air et toute humidité résiduelle - de la chambre de réaction. Ensuite, un balayage d'argon est mis en place jusqu'à atteindre une pression de 0,1 mbar. Dès lors, un plasma a été généré par application d'un champ électrique, et le plasma a été ajusté à une valeur de courant de 10 mA. Un moniteur d'épaisseur à quartz a été utilisé pour mesurer l'épaisseur *in situ,* et une fois l'épaisseur prédéterminée obtenue, le champ électrique et le balayage d'argon ont été arrêtés et la chambre de réaction a été remise sous air à pression ambiante. Alternativement, quand le taux de pulvérisation (la vitesse de dépôt) est connu, le champ électrique et le balayage d'argon sont maintenus pendant une durée prédéterminée afin d'obtenir l'épaisseur prédéterminée.

Ensuite, les électrolytes ayant un revêtement d'or sur une partie d'une face ont été sortis de la chambre de réaction et ont directement été placés dans une étuve (ici un four de type Büchi) afin de les sécher sous vide (pression 10⁻⁴ mbar) à 60 °C pendant 12 heures. Ensuite, les électrolytes ont été placés en boîte à gant.

La figure 2 montre le disque d'électrolyte polymère solide avant dépôt d'un revêtement par pulvérisation cathodique comme décrite, et la figure 3 montre l'électrolyte polymère solide ayant un revêtement d'or de 25 nm à une partie d'une face.

Ensuite, les performances électrochimiques ont été testées en demi-cellules comprenant l'électrolyte obtenu avec une durée de pulvérisation cathodique de 1 minute et l'électrolyte obtenu avec une durée de pulvérisation cathodique de 2 minutes. Les demi-cellules ont été préparées en empilant une électrode de travail autosupportée à base de LiFePO₄ avec l'électrolyte polymère solide comportant la couche d'or et du lithium métal comme la contre-électrode sur du papier silicone de façon à mettre en contact le revêtement de l'électrolyte polymère solide avec le lithium métal. L'électrolyte avait un diamètre de 12 mm, l'électrode de travail avait un diamètre de 8 mm et la contre-électrode avait un diamètre de 10 mm.

L'empilement a ensuite été calandré afin de réduire l'épaisseur initiale de l'empilement à 80 % à faible vitesse de laminage de 3 m.min⁻¹ et d'obtenir un contact intime entre les couches. Afin d'assurer la protection des composants contre l'exposition à l'air et à l'humidité, l'empilement a été placé dans un « pouch bag » en aluminium et a été thermo scellé afin de pouvoir le sortir de la boîte à gants et procéder au calandrage. Une fois le processus de calandrage terminé, le « pouch bag » contenant l'empilement calandré a été remis en boîte à gants où l'empilement a été assemblé en pile bouton selon des méthodes connus dans l'état de l'art.

Alternativement, l'empilement, le calandrage et l'assemblage en pile bouton peuvent être réalisés dans une seule boîte à gants ou dans toute environnement anhydre, p. ex. dans en salle anhydre.

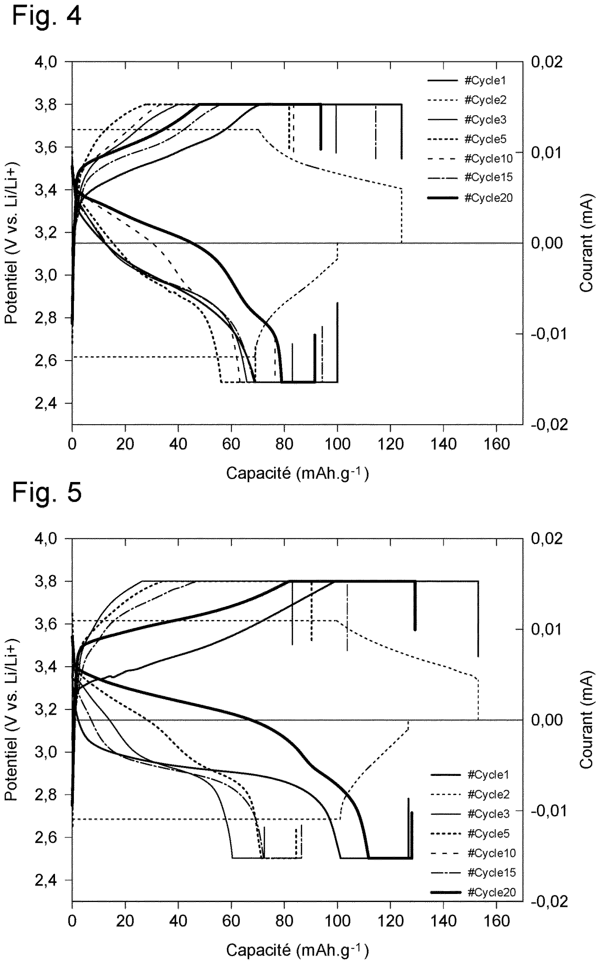

Les piles boutons comprenant les demi-cellules ont été soumises à un cyclage galvanostatique avec limitation du potentiel (GCPL), utilisant les conditions C/20 à 40 °C. La tension est limitée entre 2,5 V vs. Li/Li⁺ et 3,8 V vs. Li/Li⁺. Les figures 4 et 5 montrent la tension (le potentiel) et le courant en fonction de la capacité pour les demi-cellules avec l'électrolyte polymère solide comprenant le revêtement obtenu par une durée de pulvérisation cathodique de respectivement 1 minute et de 2 minutes. Pour les deux demi-cellules, une capacité d'au moins 100 mAh/g qui est quasi réversible est obtenue, les valeurs mesurées étant plus élevées pour le revêtement de 2 minutes.

### Exemple 2

Trois électrolytes selon la présente invention ont été préparés, ayant un revêtement en or sur les deux faces, et dans lequel l'épaisseur du revêtement a été variée.

Le même disque d'électrolyte polymère solide, la même cible et le même appareil de PVD qu'en exemple 1 ont été utilisés. Le revêtement sur les deux faces a été réalisé en deux étapes, chaque étape suivant le procédé utilisé dans l'exemple 1 pour obtenir d'abord un revêtement à une partie de la première face du disque d'électrolyte polymère solide et obtenir ensuite un revêtement à une partie de la deuxième face du disque d'électrolyte polymère solide. La durée prédéterminée de la pulvérisation cathodique a été varié entre 1 minute, 2 minutes et 15 minutes, dans lequel la même durée a été utilisé pour chaque étape des deux étapes, afin d'obtenir la même épaisseur de revêtement aux deux faces du disque d'électrolyte polymère solide.

Ensuite, les électrolytes ayant un revêtement d'or sur une partie des deux faces ont été sortis de la chambre de réaction et ont directement été placés dans une étuve (ici un four de type Büchi) afin de les sécher sous vide (pression 10⁻⁴ mbar) à 60 °C pendant 12 heures. Ensuite, les électrolytes ont été placés en boîte à gant.

Ensuite, les performances électrochimiques ont été testées pour des cellules symétriques comprenant les électrolytes ainsi obtenus. Les cellules symétriques ont été préparées en empilant une électrode de lithium métal avec l'électrolyte polymère solide comprenant une couche d'or sur ses deux faces et du lithium métal sur du papier silicone. L'empilement a ensuite été placé dans un « pouch bag » en aluminium et a été thermo scellé afin de pouvoir le sortir de la boîte à gants et procéder au calandrage, tout en assurant la protection de l'empilement contre l'exposition à l'air et à l'humidité. L'empilement a ensuite été calandré afin de réduire l'épaisseur initiale de l'empilement à 80 % à faible vitesse de laminage de 3 m.min⁻¹ et d'obtenir un contact intime entre les couches.

Une fois le processus de calandrage terminé, le « pouch bag » contenant l'empilement calandré a été remis en boîte à gants où l'empilement a été assemblé en pile bouton selon des méthodes connus dans l'art.

Comme dans l'exemple 1, et alternativement, l'empilement, le calandrage et l'assemblage en pile bouton peuvent être réalisés dans une seule boîte à gants ou dans toute environnement anhydre, p. ex. dans en salle anhydre

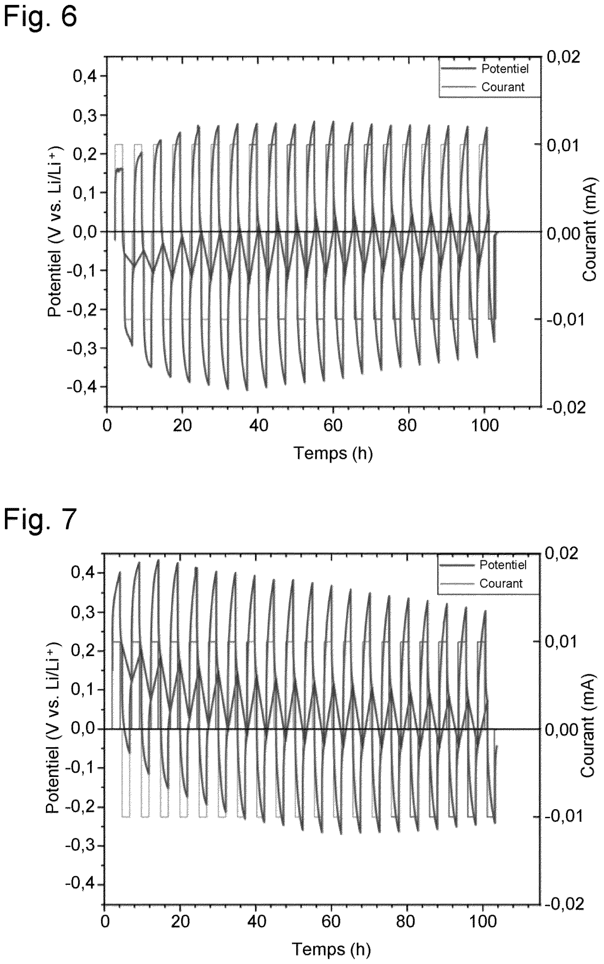

Les trois cellules symétriques ont été cyclées à 10 µA/cm² et à 40 °C. Les figures 5 à 7 montrent la tension et le courant mesurés en fonction de la durée du teste de cyclage. La surtension moyenne de chaque cellule était environ 300 mV et évoluait légèrement au cours du cyclage. Aucune des trois cellules montrait un court-circuit après 100 heures de cyclage, tandis qu'une cellule symétrique avec un électrolyte polymère solide sans couche métallique était court-circuitée après seulement 5 cycles à 10 µA/cm² (pas montré).

## Revendications

1. Un électrolyte solide comprenant un substrat réalisé dans un matériau d'électrolyte solide, ledit substrat présentant une première face et une deuxième face, **caractérisé en ce que** l'électrolyte solide comprend en outre un revêtement métallique disposé sur au moins une partie de la première face et/ou sur au moins une partie de la deuxième face du substrat.

2. L'électrolyte solide selon la revendication 1, dans lequel le revêtement métallique comprend de l'or, de l'argent, de l'étain, ou des combinaisons de ceux-ci.

3. L'électrolyte solide selon l'une quelconque des revendications précédentes, dans lequel le revêtement métallique a une épaisseur comprise entre 1 nm et 100 nm.

4. L'électrolyte solide selon l'une quelconque des revendications précédentes, dans lequel le revêtement métallique comprend deux ou plusieurs couches métalliques.

5. L'électrolyte solide selon l'une quelconque des revendications précédentes, dans lequel le matériau d'électrolyte solide est un matériau d'électrolyte polymère solide comprenant une matrice polymère comprenant un polymère ou d'un copolymère sur base d'oxyde de polyéthylène ou son alliage avec du fluorure de polyvinylidène.

6. L'électrolyte solide selon l'une quelconque des revendications 1 à 4, dans lequel le matériau d'électrolyte solide est un matériau hybride du type polymère-inorganique.

7. Une batterie tout-solide comprenant un électrolyte solide selon l'une quelconque des revendications 1 à 6.

8. La batterie tout-solide selon la revendication 7, dans lequel la batterie est une batterie du type Li-ion ou du type Na-ion.

9. La batterie tout-solide selon la revendication 8, comprenant une électrode négative comportant du lithium métallique, ladite électrode négative formant une interface avec le revêtement métallique de l'électrolyte solide.

10. Un procédé de fabrication d'un électrolyte solide comprenant un revêtement métallique, comprenant les étapes de :
- Mise à disposition dans une chambre de réaction d'un substrat réalisé dans un matériau d'électrolyte solide, ledit substrat présentant une première face et une deuxième face ;
- Mise à disposition d'une cible métallique ou d'un fil comprenant un métal dans la chambre de réaction ;
- Réduction de la pression dans la chambre de réaction jusqu'à une pression prédéterminée ;
- Introduction d'un gaz dans la chambre de réaction ;
- Application d'un champ électrique pour ioniser le gaz, créant ainsi un plasma ;
- A l'aide dudit plasma, enlèvement des atomes de la cible métallique ou du fil comprenant un métal et condensation des atomes sur la première et/ou la deuxième face du substrat, obtenant ainsi l'électrolyte solide comprenant le revêtement métallique.

11. Le procédé selon la revendication 10, dans lequel le gaz est un gaz inerte, de préférence de l'argon.

12. Le procédé selon l'une quelconque des revendications 10 à 11, dans lequel la cible métallique ou le fil comprenant un métal comprend de l'or, de l'argent, de l'étain, ou des combinaisons de ceux-ci.

13. Le procédé selon l'une quelconque des revendications 10 à 12, dans lequel la pression prédéterminée est comprise entre 0,01 mbar et 0,5 mbar.

14. Le procédé selon l'une quelconque des revendications 10 à 13, comprenant en outre une étape d'application d'un masque à une portion du substrat.

15. Le procédé selon la revendication 14, dans lequel le masque couvre au moins une tranche du substrat.
